# EUROPEAN PATENT APPLICATION

(11) **EP 2 650 781 A2**
(43) Date of publication of application: **16.10.2013**
(21) Application number: 13162731.7
(22) Date of filing: 08.04.2013
(51) Int. Cl.: G06F 9/44

(54) **Method for detecting hardware**

(30) Priority: 09.04.2012 TW 101112460
(71) Applicant: Asrock Inc., Taipei City 112 (TW)
(72) Inventor: Chan, Chong-Kim, Taipei City 112 (TW); Chen, Yu-Guang, Taipei City 112 (TW)
(74) Representative: Chamberlain, Alan James

(57) **Abstract**

A method for detecting hardware suitable for an electronic apparatus is provided. In the method, a booting signal is received. A graphical interface is started. The graphical interface includes a mainboard layout. And each connector is detected for obtaining peripheral hardware configured in the electronic apparatus. A figure corresponding to the peripheral hardware configured in the electronic apparatus and a location information of the peripheral hardware on a mainboard are obtained from a database. The figure is placed on a corresponding connector location of the mainboard layout.

## Description

### CROSS-REFERENCE TO RELATED APPLICATION

This application claims the priority benefit of Taiwan application serial no. 101112460, filed on April 9, 2012. The entirety of the above-mentioned patent application is hereby incorporated by reference herein and made a part of this specification.

### TECHNICAL FIELD

The disclosure relates to a method for detecting hardware, and particularly relates to a visualized method for detecting hardware.

### BACKGROUND

In general, after a user presses the power button, a computer system goes through a series of hardware initializations, is checked for errors, and then may be normally booted. Specifically, after the power of a computer system is turned on, the basic input output system (BIOS) is loaded into memory and starts to perform a power on self test (POST) process to initialize and check the hardware components of the computer system and ensure normal operation of the hardware components.

Therefore, the BIOS plays a very important role in the computer system. If a problem occurs during booting, the user needs to collect the information of the mainboard and the peripheral hardware to report to the technical support department of the manufacturer.

### SUMMARY

The disclosure provides a method for detecting hardware. A connection status between a mainboard and peripheral hardware is provided in a visualized way.

Specifically, the disclosure provides a method for detecting hardware adapted for an electronic apparatus. In this method, a booting signal is received. In addition, a graphical interface including a mainboard layout having a plurality of connector locations is started. Then, a plurality of connectors of the electronic apparatus are respectively detected to obtain at least one peripheral hardware configured in the electronic apparatus. Moreover, a figure corresponding to each of the at least one peripheral hardware configured in the electronic apparatus and a location information of one of the connectors coupled to each of the at least one peripheral hardware on the mainboard layout are obtained from a database. According to the location information corresponding to each of the at least one peripheral hardware, the figure is placed on a corresponding connector location in the mainboard layout.

In an embodiment of the disclosure, after receiving the booting signal, a network card driver is accessed from a firmware unit, and the network card driver is loaded to connect to the Internet.

In an embodiment of the disclosure, after detecting the at least one peripheral hardware configured in the electronic apparatus, a test process may be further performed to the detected peripheral hardware to obtain a test result. Moreover, after obtaining the test result, the test result may be further transmitted to a remote apparatus through the Internet.

In an embodiment of the disclosure, after the figure is placed on the corresponding connector location in the mainboard layout, an input interface may be started to receive a text content through the input interface. Moreover, the text content, the mainboard layout, and the test result are packaged into a file to transmit the file to a remote apparatus through the Internet.

In an embodiment of the disclosure, in the method for detecting hardware, when receiving the booting signal, a booting process is performed to start the graphical interface in the booting process. In addition, when performing the booting process, whether a command is received may be further determined to determine whether to start the graphical interface. If the command is received, the graphical interface is started. If the command is not received, the booting process proceeds.

In an embodiment of the disclosure, the graphical interface is stored in the firmware unit.

Based on the above, the disclosure illustrates a connection status between the mainboard and each of the peripheral hardware at the booting stage, thereby allowing the user to know the peripheral hardware currently configured on the electronic apparatus quickly and intuitively. In addition, the network card driver is loaded at the booting stage to connect to the Internet. In this way, when the user finds a problem, the user may promptly transmit the mainboard layout to the address of the server of the maintenance end, thereby improving an efficiency of technical support.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.

FIG. 1 is a flowchart illustrating a method for detecting hardware according to an embodiment of the disclosure.

FIG. 2 is a schematic view illustrating a mainboard layout according to an embodiment of the disclosure.

FIG. 3 is a schematic view illustrating a mainboard layout with figure placement according to an embodiment of the disclosure.

### DETAILED DESCRIPTION OF DISCLOSED EMBODIMENTS

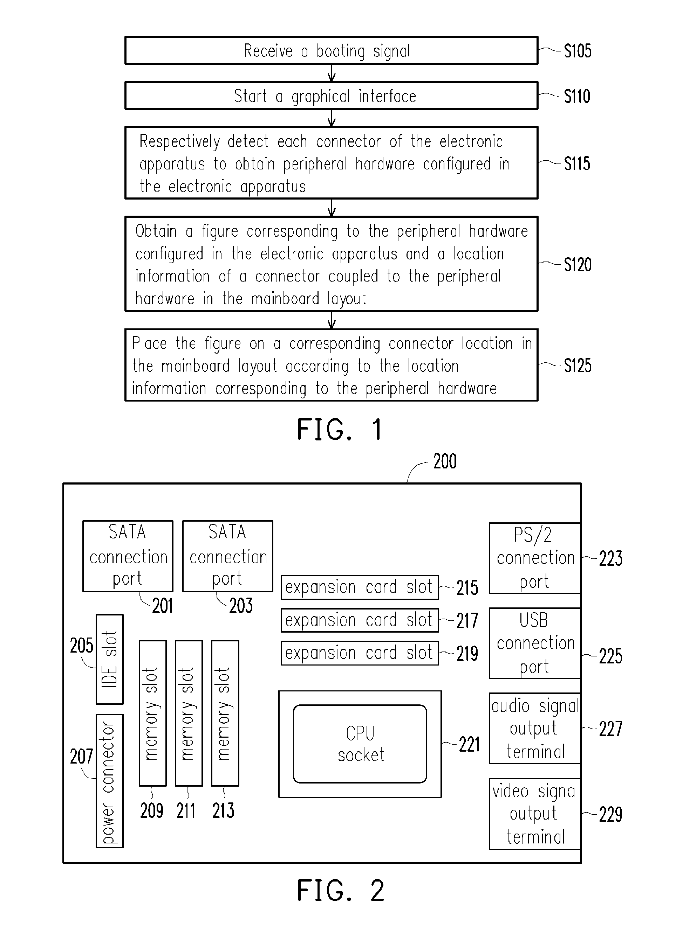

FIG. 1 is a flowchart illustrating a method for detecting hardware according to an embodiment of the disclosure. The embodiment is adapted for an electronic apparatus, such as a personal computer, a laptop computer, or a tablet computer. Here, the electronic apparatus includes a processing unit and a firmware unit, wherein the firmware unit stores a firmware code. When the electronic apparatus is booting, the processing unit accesses the firmware code to perform a booting process, thereby loading an operating system. The processing unit is a central processing unit (CPU), for example, and the firmware unit is a basic input output system (BIOS) memory, for example. The BIOS memory stores a firmware code of the BIOS.

Referring to FIG. 1, at step S105, a booting signal is received. For example, the electronic apparatus has the central processing unit. When the central processing unit receives the booting signal (for executing a cold start or a warm start), the central processing unit accesses the firmware code in the BIOS memory to perform the booting process.

After receiving the booting signal, the central processing unit may also access a network card driver from the firmware unit and load the network card driver, such that the electronic apparatus may be connected to the Internet. For example, the network card driver is built in the BIOS memory. When the booting signal is received, the central processing unit accesses the network card driver from the BIOS memory to load the network card driver. Here, the network card driver loaded at a BIOS booting stage and a network card driver loaded in the operating system are different, but the network card drivers have the same function. The above is described for an exemplary purpose. The disclosure is not limited thereto.

In this embodiment, a PXE (Preboot eXecution Environment) boot is executed to load an option read-only memory (ROM), for example. For example, a network card of the electronic apparatus has a boot ROM having PXE, and the BIOS memory supports the PXE boot. At the BIOS booting stage, the network card driver is loaded. In this way, the electronic apparatus may be connected to the Internet at the BIOS booting stage.

Then, at step S110, a graphical interface is started. Here, the graphical interface includes a mainboard layout including a plurality of connector locations. For example, the mainboard layout may be a picture of the mainboard or a schematic diagram of a hardware component. In addition, the mainboard layout is stored in the BIOS memory.

For example, FIG. 2 is a schematic view illustrating a mainboard layout according to an embodiment of the disclosure. Referring to FIG. 2, a mainboard layout 200 illustrates a plurality of connector locations 201-229 illustrated according to actual locations of a variety of connectors configured on the mainboard, for example.

For example, the connector locations 201 and 203 are locations at which serial advanced technology attachment (SATA) connection ports are actually configured in the mainboard. The connector location 205 is a location at which an integrated device electronics (IDE) slot is actually configured in the mainboard, for example. The connector location 207 is a location at which a power connector is actually configured in the mainboard, for example. The connector locations 209, 211, and 213 are locations at which memory slots are actually configured in the mainboard, for example. The connector locations 215, 217, and 219 are locations at which expansion card slots are actually configured in the mainboard, for example. The connector location 221 is a location at which a CPU socket is actually configured in the mainboard, for example. The connector location 223 is a location at which a PS/2 connector is actually configured in the mainboard, for example. The connector location 225 is a location at which a universal serial bus (USB) connection port is actually configured in the mainboard, for example. The connector locations 227 and 229 are respectively locations at which an audio signal output terminal and an video signal output terminal are actually configured in the mainboard, for example,

The SATA connection ports (the connector locations 201 and 203) mainly serve for data transmission between the mainboard and a mass storage apparatus (e.g. a SATA hard disk or a SATA optical disk drive), the IDE slot (the connector location 205) is configured to connect to an IDE hard disk or a compact disc read only memory (CD ROM) drive. The power connector (the connector location 207) is configured to connect to a power supply. The memory slots (the connector locations 209, 211, and 213) are configured to install a memory. The expansion card slots (the connector locations 215, 217, and 219) are configured to install a display card, a network card, or a sound card. The CPU socket (the connector location 221) is configured to install a CPU. The PS/2 connector (the connector location 223) is configured to connect to a PS/2 keyboard or a PS/2 mouse. The USB connection port (the connector location 225) is configured to connect to a component having a USB interface. The audio signal output terminal (the connector location 227) is configured to connect to a speaker. And the video signal output terminal (the connector location 229) is configured to connect to a display. However, types and function of the connectors above are only listed for an exemplary purpose. The disclosure is not limited thereto.

By displaying the mainboard layout 200 in the graphical interface, the user may easily understand a configuration status of the mainboard.

In addition, when performing the booting process, the central processing unit may further determine whether a command is received to determine whether to start the graphical interface. If the command is received, the graphical interface is started. If the command is not received, the booting process proceeds. Namely, writing the judgment above in the firmware code of the BIOS allows the user to start the graphical interface with a hotkey during the booting process.

Then, at Step 115, each of the connectors in the electronic apparatus is detected to obtain peripheral hardware configured in the electronic apparatus. For example, the mainboard includes connectors such as the expansion card slots, memory slots, IDE slot, power connector, SATA connection port, PS/2 connector, USB connection port, audio signal output terminal, video signal output terminal for connecting peripheral hardware such as a keyboard, mouse, hard disk, display card, audio card, network card, power supply, memory, and optical disk drive. After starting the graphical interface, whether the connectors are connected to the peripheral hardware are detected. For example, whether a hard disk is installed to the SATA connection port, whether a display card or a wireless network card is installed to the expansion card slot, and whether a memory is installed to the memory slot are detected.

In addition, if there are a plurality of connectors of the same kind, the plurality of connectors of the same kind may be numbered in advance, for example. For example, when there are three memory slots, numbers of the memory slots may be used to identify which of the memory slots is configured with a memory card when detecting the memory slots. In this way, a location of the connector configured with the peripheral hardware may be further obtained.

Then, at step 120, a figure corresponding to the peripheral hardware configured in the electronic apparatus and a location information of a connector coupled to the peripheral hardware on the mainboard layout are obtained from a database. The figure may be a picture of the peripheral hardware or a text illustration.

For example, one or more databases are configured in the BIOS memory, and figures corresponding to a variety of peripheral hardware are stored in the databases. In addition, a location information of each of the connectors on the mainboard is stored in the databases according to the mainboard in the electronic apparatus. For example, the location information may be represented with coordinates. A lower left corner of the mainboard layout may serve as an origin, a parallel axis is X-axis, and a vertical axis is Y-axis, for example. And the databases store coordinates of each of the connector locations in the mainboard layout. After the central processing unit finishes detecting the peripheral hardware installed on the mainboard, the peripheral hardware configured on the mainboard and the connectors to which the peripheral hardware are configured on the mainboard are known. Accordingly, the figure corresponding to the detected peripheral hardware and the location information of the connector to which each peripheral device is configured on the mainboard may be obtained from the databases.

In this embodiment, each time when one of the peripheral hardware is detected, a corresponding figure and a location information corresponding to the main board are obtained from the databases. In other embodiments, it may wait until detection is completely finished to sequentially obtain the figure corresponding to each of the detected peripheral hardware and the location information in correspondence with the mainboard from the databases. The disclosure is not limited thereto.

Then, at step S125, the figure is placed on a corresponding connector location in the mainboard layout according to the location information corresponding to the peripheral hardware. In this way, the connectors that are configured with the peripheral hardware and the connectors that are not configured with the peripheral hardware may be known from the mainboard layout.

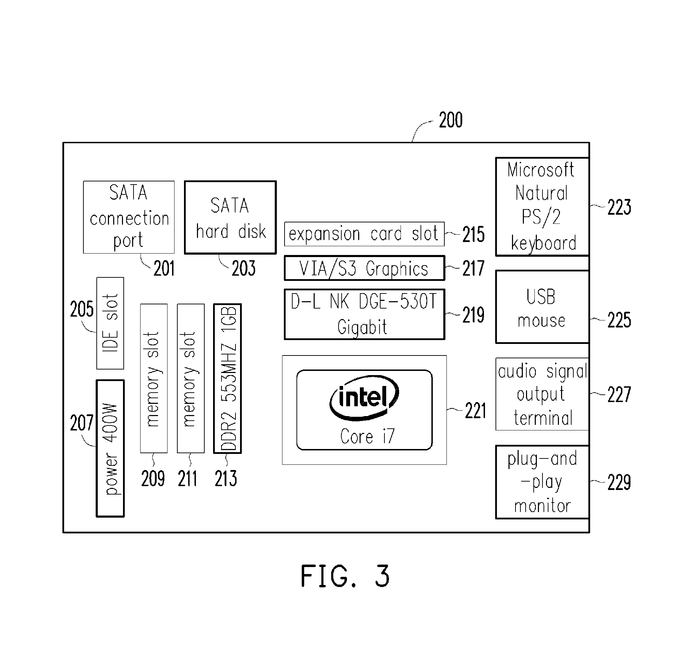

For example, FIG. 3 is a schematic view illustrating a mainboard layout with figure placement according to an embodiment of the disclosure. In this embodiment, a text illustration is used as the figure for an exemplary purpose. For example, the connectors such as the power connector, SATA connection port, memory slot, two of the expansion card slots, CPU socket, PS/2 connection port, USB connection port, and the video signal output terminal are respectively installed to corresponding peripheral hardware.

In FIG. 3, a square in a bold black line indicates that a connector location is installed with the corresponding peripheral hardware. Here, given that the SATA connection port, power connector, memory slot, two expansion card slots, CPU socket, PS/2 connection port, USB connection port, and video signal output terminal respectively correspond to the connector locations 203, 207, 213, 217, 219, 221, 223, 225, and 229. Accordingly, figures corresponding to the peripheral hardware above that are detected to have been installed are respectively placed on the connector locations. Here, text illustrations are used as an example.

In addition, after detecting the peripheral hardware configured in the electronic apparatus, a test process may be performed to the detected peripheral hardware to obtain a test result. For example, a test program to the system and the peripheral hardware, such as a memory test program, hard disk test program, CPU test program, etc., are added in the firmware code to test stability of the peripheral hardware.

Moreover, since the electronic apparatus is connected to the Internet at the BIOS booting stage, a server address of a maintenance end may be set in the BIOS memory in advance to automatically connect to the server address at the maintenance end after a network function of the electronic apparatus is set. In this way, after obtaining the test result, the test result may be transmitted to a remote apparatus automatically (or manually according to an instruction of the user) through the Internet.

In addition, a function may be set in the BIOS to start an input interface after the figure is placed on the corresponding connector location in the mainboard layout. At the BIOS booting stage, the user may input a text content through the input interface. In addition, the text content, mainboard layout, and test result may be packaged into a file. Then, the file may be transmitted to the remote apparatus through the Internet. In other embodiments, the text content input by the user, the mainboard layout, or the test result may be individually transmitted to the remote apparatus or randomly combined and packaged into a file for transmission afterwards.

In view of the foregoing, in the embodiments above, the network card driver is loaded at the booting stage to connect to the Internet, and the graphical interface is used to illustrate a connection status between the mainboard and each of the peripheral hardware. In this way, the user is not only allowed to quickly and intuitively know the peripheral hardware configured in the electronic apparatus but promptly transmit the mainboard layout to the address of the server of the maintenance end when the user finds a problem, thereby improving an efficiency of technical support.

## Claims

1. A method for detecting hardware adapted for an electronic apparatus, comprising:
receiving (S105) a booting signal;
**characterized in that** the method further comprises:
starting (S110) a graphical interface comprising a mainboard layout having a plurality of connector locations (201-229);
respectively detecting (S115) a plurality of connectors of the electronic apparatus to obtain at least one peripheral hardware configured in the electronic apparatus;
obtaining (S120) a figure corresponding to each of the at least one peripheral hardware configured in the electronic apparatus and a location information of one of the connectors coupled to each of the at least one peripheral hardware in the mainboard layout; and
placing (S125) the figure on the mainboard layout (200) according to the location information corresponding to each of the at least one peripheral hardware.

2. The method for detecting hardware as claimed in claim 1, after receiving (S105) the booting signal, further comprising:
accessing a network card driver from a firmware unit; and
loading the network card driver to connect to an Internet.

3. The method for detecting hardware as claimed in claim 2, after respectively detecting (S115) the plurality of connectors of the electronic apparatus to obtain the at least one peripheral hardware configured in the electronic apparatus, further comprising:
performing a test process to the at least one peripheral hardware of the electronic apparatus to obtain a test result.

4. The method for detecting hardware as claimed in claim 3, after obtaining (S120) the test result, further comprising:
transmitting the test result to a remote apparatus through the Internet.

5. The method for detecting hardware as claimed in claim 3, after placing (S125) the figure on the mainboard layout (200), further comprising:
starting an input interface;
receiving a text content through the input interface;
packaging the text content, the mainboard layout (200), and the test result into a file; and
transmitting the file to a remote apparatus through the Internet.

6. The method for detecting hardware as claimed in claim 1, further comprising:
when receiving the booting signal, performing a booting process to start the graphical interface in the booting process.

7. The method for detecting hardware as claimed in claim 6, wherein performing the booting process comprises:
determining whether a command is received;
if the command is received, starting the graphical interface; and
if the command is not received, proceeding with the booting process.

8. The method for detecting hardware as claimed in claim 1, wherein the graphical interface is stored in a firmware unit.
